(19) Europäisches Patentamt
European Patent Office
Office européen des brevets

(11) Veröffentlichungsnummer: **0 323 482**
**B1**

(12) **EUROPÄISCHE PATENTSCHRIFT**

(45) Veröffentlichungstag der Patentschrift: **23.01.91**

(51) Int. Cl.$^5$: **C 04 B 18/04,** C 02 F 11/14, E 02 D 31/00

(21) Anmeldenummer: **87906566.2**

(22) Anmeldetag: **10.10.87**

(86) Internationale Anmeldenummer: **PCT/DE87/00462**

(87) Internationale Veröffentlichungsnummer: **WO 88/02739 21.04.88 Gazette 88/09**

(54) **VERFAHREN ZUR ENTSORGUNG VON SCHADSTOFFBELADENEN STOFFEN UND VERWENDUNG DES DABEI HERGESTELLTEN PRODUKTES.**

(30) Priorität: **10.10.86 DE 3634650**

(43) Veröffentlichungstag der Anmeldung: **12.07.89 Patentblatt 89/28**

(45) Bekanntmachung des Hinweises auf die Patenterteilung: **23.01.91 Patentblatt 91/04**

(84) Benannte Vertragsstaaten: **AT BE CH DE FR GB IT LI LU NL SE**

(56) Entgegenhaltungen:
**EP-A-0 031 667**
**EP-A-0 050 371**
**EP-A-0 157 749**
**DE-A-3 506 550**
**FR-A-2 320 266**
**GB-A-1 505 861**

(73) Patentinhaber: **Hölter GmbH**
**Beisenstrasse 39-41**
**D-4390 Gladbeck (DE)**

(72) Erfinder: **LUKAS, Walter**
**Lanserstrasse 15a**
**A-6071 Aldrans (AT)**
Erfinder: **GEBHARD, Georg**
**Gebhardstrasse 36**
**D-4300 Essen (DE)**

(74) Vertreter: **Becker, Thomas, Dr. et al**
**Becker & Müller Patentanwälte**
**Eisenhüttenstrasse 2**
**D-4030 Ratingen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 323 482 B1

**Beschreibung**

Verfahren zur Entsorgung von schadstoffbeladenen Materialien, Böden und Flüssigkeiten und Verwendung des dabei hergestellten Produktes

Die Erfindung betrifft ein Verfahren zur Entsorgung von schadstoffbeladenen Materialien, Böden und Flüssigkeiten sowie die Verwendung des dabei hergestellten Produktes.

In den unterschiedlichsten Bereichen der Industrie, Landwirtschaft oder dergleichen fallen schadstoffbelastete Feststoffe und Flüssigkeiten an. Beispielhaft seien industrielle oder kommunale Abwässer, Sickerwässer aus Deponien, Flotationsrückstände im Bergbau oder Klärschlämme genannt, die neben organischen Bestandteilen zum Beispiel diverse Salze oder Schwermetalle enthalten.

Unternehmungen, Kommunen und Landwirte sind aufgefordert, für eine möglichst rückstandsfreie Entsorgung dieser Stoffe Sorge zu tragen. Dabei stellt der Stand der Technik folgende Entsorgungsverfahren zur Verfügung.

An erster Stelle ist die Extraktion mittels chemischer Lösungen zu nennen. Abgesehen davon, daß hier zum Teil mit Substanzen gearbeitet wird, die selbst Schadstoffe darstellen, erfordert das Verfahren einen hohen apparativen Aufwand.

Daneben ist die thermische Behandlung derartiger Stoffe bekannt. Auch hier ist ein erheblicher apparativer Aufwand notwendig, darüber hinaus entstehen giftige Verbrennungsgase, die wiederum entsorgt werden müssen.

Aus Chem.-Ing.-Tech. 56 (1984), Nr. 1, S. 55, 56 ist die Verfestigung von Sonderabfällen mit diversen Bindern wie Zement, Wasserglas, Puzzolan, Kalk oder Gips bekannt. Der Autor weist darauf hin, daß in keinem Fall derartige Verfestigungs- und Stabilisierungs-Technologien die Aufgabe oder auch nur die Fähigkeit haben, gefährliche Inhaltsstoffe aus den zu behandelnden Böden oder Abfällen zu entfernen. Die Verfestigung wird vielmehr als physikalischer Einschluß der Schadstoffkomponenten in eine feste und wenig wasserdurchlässige Masse beschrieben.

Aus der DE—A 35 06 550 ist ein Verfahren zur Einbindung umweltgefährdender Stoffe bekannt, wobei zweistufig gearbeitet wird. Zunächst wird Kraftswerksasche und Wasser intensiv durchmischt, bis eine homogene Durchmischung mit breiiger Konsistenz erreicht ist. Anschließend werden der so erhaltene Brei und der umweltgefährdende Stoff zusammengeführt und in einer zweiten Mischstufe intensiv durchmischt. Auch hier erfolgt wiederum nur eine physikalische Einbindung der umwaltgefährdenden Stoffe. Das erhärtete Produkt weist unbefriedigende Auslageeigenschaften auf.

Aus der EP—A—50371 ist weiterhin ein Verfahren zur schadlosen Deponierung von Abfallstoffen bekannt, wobei der Abfallstoff mit Braunkohlenachse gemischt wird. Dabei werden die Mischungsverhältnisse so aufeinander eingestellt, um die Abfallstoffe zu neutralisieren, die dann in dem erhärteten Produkt physikalischen eingebunden sind.

Schließlich ist noch aus der DE—A 28 33 757 ein mehrstufiges Verfahren zum Härten von anorganischem wässrigem Abfallschlamm bekannt, der als nicht-wässrige Bestandteile im wesentlichen Calciumsalze aus der Gruppe Calciumsulfat und Calciumsulfit enthält, und worin mindestens 30 Gew.-% der Feststoffe aus Calciumsulfithalbhydrat bestehen. Das Verfahren arbeitet so, daß zunächst der Schlamm eingedickt wird, die flüchtigen Flüssigkeiten dann abgezogen werden, das erhaltene Produkt anschließend getempert wird und der teilweise entwässerte Schlamm danach mit mindestens einem Teil des Zwischenproduktes unter Bildung eines härtbaren Produktes gemischt wird.

Auch dieses Verfahren weist eine außerordentlich hohen apparativen Aufwand auf und ist verfahrensmäßig zur Entsorgung großer Abfallmengen im industriellen Bereich ungeeignet.

Als weitere Entsorgungsmöglichkeit verbleibt noch die Deponierung. Diese kann nur als Notlösung betrachtet werden, da die Schadstoffe als solche nicht beseitigt werden. Auch bei den heute bekannten Möglichkeiten der Deponieabdichtung liegen die toxischen Bestandteile nach wie vor in der Deponie und können zumindest mittel- oder langfristig zu einer Belastung des Grundwassers führen. Häufig können die Stoffe nur auf Sonderdeponien gelagert werden, die kapazitätsmäßig begrenzt sind.

Der Erfindung leigt insoweit die Aufgabe zugrunde, eine Möglichkeit aufzuzeigen, wie schadstoffbelastete Materialien, Böden und Flüssigkeiten leicht und sicher entsorgt werden können, wobei eine möglichst geringe Auslaugbarkeit beziehungsweise geringe Wasser-Durchlässigkeitswerte des hergestellten Produktes angestrebt sind. Dabei ist insbesondere angestrebt, möglichst auch untershiedliche Arten von Schadstoffen mit ein und demselben Verfahren zu entsorgen und—soweit eine Deponierung unumgänglich ist—die Deponierungsmenge zu minimieren. Mit der Erfindung soll aber vorzugsweise eine Wiederverwendbarkeit der ursprünglich mit den Schadstoffen belasteten Stoffe angegeben werden.

Der Erfindung liegt die Erkenntnis zugrunde, daß specifische Aschen überraschenderwise in der Lage sind, bei der Hydratation unterschiedlichste Schadstoffionen in die Hydratphasen einzubinden, sofern die schadstoff balsteten Stoffe unmittelbar mit der Achse (gegebenenfalls unter gleichzeitiger Wasserzugabe) gemischt werden und in der Mischung ein definiertes Verhältnis Wasser/hydratphasenbildende Substanzen zwischen 0,23 und 0,35 eingestellt wird. Der Begriff Wasser/hydratphasenbildende Substanzen ist dabei erfindungsgemäß so definiert, daß der Anteil hydratphasenbildende Substanzen zum Beispiel auch pulverförmige, zu entsorgende "Feststoffe" wie Klärschlämme, die selbst zumindest latenhydraulische Eigenschaften zeigen, umfaßt (neben der Achse als Ausgangsmaterial). Dabei hat sich eine deutliche Abhängigkeit der technologischen Parameter des "Stabilisates" von diesem Wert gezeigt. Zu geringe oder zu hohe Werte (kleiner 0,23 bzw. größer 0,35) ergeben geringe chemische Einbindungen und höhere Durchlässigkeitswerte. Bei Werten über 0,35 entsteht ein zu hohes Porenvolumen, bei Werten kleiner 0,23 kann keine vollständige Hydratation mehr ablaufen. Als optimal hat sich ein Wert zwischen 0,23 und 0,30 herausgestellt. Bei der Entsorgung von Flüssigkeiten, beispielsweise industriellen Abwässern oder Abwässern aus sogenannten REA-Anlagen ist dieses Wasser zumindest teilweise bereits Bestandteil der Mischungskomponenten. Bei der Entsorgung zum Beispiel von schadstoffbelastetem Erdreich ist die erforderliche Wassermenge separat zuzugeben. Dies kann durch normales Leitungswasser, vorzugsweise aber auch durch Verwendung eines Abwassers erfolgen.

Es hat sich überraschenderweise gezeigt, daß die Vermischung der Asche(n) mit metallhaltigen, salzhaltigen oder einen Anteil an anorganischen Bestandteilen aufweisenden Wässern, Böden oder anderen pulverförmigen Stoffen dazu führt, daß die Schadstoffe zum großen Teil in der Aschse gebunden werden. Die Versuchsergebnisse deuten dabei auf eine chemische Einbindung der Schadstoffionen in die bei der Hydratation gebildeten Mineralphasen hin. Dabei konnten sowohl im Tricalciumaluminatsulfathydrat (Ettringit) wie auch in der sulfatärmeren und kalkreicheren Lösung des sogenannten Monosulfats

$$(3CaO \cdot Al_2O_3 \cdot CaSO_4 \cdot 12H_2O)$$

und schließlich in den später gebildeten Calciumsilikathydratphasen die genannten Schadstoffionen nachgewiesen werden, sofern die vorstehend genannten Merkmale eingehalten wurden. Versuche haben weiterhin belegt, daß bei einem aus der genannten Mischung gebildeten Produkt praktisch keine Auslaugung stattfindet, offensichtlich dadurch begünstigt, daß alle Ausgangsstoffe (Achse, zu entsorgender Stoff, gegebenenfalls zusätzliche Flüssigkeit) von Anfang an zusammengeführt und gemischt werden. Auf diese Weise können offensichtlich schon die während der anfänglichen Hydratation gebildeten Hydratphasen Schdsteoffionen in das Kristallgitter chemisch einbinden und im weiteren Verlauf der Hydratation weiter stabilisieren.

Die Erfindung schlägt in Erweiterung der vorgenannten allgemeinen Ausführungsform verschiedene Merkmale vor, um eine noch erhöhte Aufnahmebereitschaft der Achse an Schadstoffen zu erreichen.

Die Aufnahmefähigkeit der Mischung in bezug auf die diversen (toxischen) Bestandteile kann insbesondere durch Zusatz chemischer Substanzen, insbesondere Fließmittel, zum Beispiel Melaminharz, Naphtalin-, Ligninsulfonate (durch eine Verbesserung der Benetzbarkeit) oder auch Dichtungsmittel, insbesondere hydrophobierende Dichtungsmittel oder alkaohol-lösliche Silikone weiter erhöht werden. Diese Zusätze führen zu einer besonders dichten abgebundenen Masse und wirken daher wie ein Stabilisator in bezug auf die Schadstoffbindung. Als Beispiele für derartige Dichtungsmittel seien ergänzend Metallseifen oder auch Metallseifenbildner wie Arminseifen genannt. Auch sogenannte quellende Dichtmittel, zum Beispiel Quelltone, Natriumalginat oder kolloidbildende Substanzen führen zu besonders dichten Körpern und damit einer besonders festen Einbindung der Schadstoffe.

Diese Zusatzmittel sollen in Mengen zwischen 0,1 und 1,8 Gew.-%, bezogen auf den Ascheanteil (der auch hier wieder sonstige hydratphasenbildende Substanzen umfaßt) eingesetzt werden. Ihre genaue Dosierung hängt vor allem von der Art und Konzentration des zu entsorgenden Stoffes sowie den verwendeten, mit Wasser reagierenden Substanzen ab.

Für die Bildung der genannten Phasen, die zumindest einen Teil der Einbindung bewirken, ist ein Gehalt an Calciumsulfat oder -sulfitträgern notwendig. Ist dieser ausnahmsweise nicht schon im Bindemittel enthalten, wird er getrennt zugeführt. Neben dem besonders "aktiven" Aschen aus kohle- und ölgefeuersten Wirbelschichtfenerungen sind vor allem Aschen aus Filteranlagen besonders geeignet.

Je feiner die Asche ist, um so größer ist die entsprechende Oberfläche und damit die Reaktionsbereitschaft der Achse. Die Achse oder das Aschegemisch soll deshalb in einer Feinheit vom 2000—4000 $cm^2/g$ (spez. Oberfläche nach Blaine) oder, besonders vorteilhaft als gemahlene Asche (spez. Oberfläche nach Blaine bis 10000 $cm^2/g$) eingesetzt werden. Ebenso ist es vorteilhaft, die übrigen, hydraulische reagierenden Substanzen in feinteiliger Form zuzugeben.

Der Anteil der Asche(n) im Verhältnis zur Gesamtmischung hängt einerseits von der Reaktionsbereitschaft der Achse selbst ab, wie vorstehend beschrieben, zum anderen aber auch vom Grad der jeweiligen Schadstoffbelastung des zu entsorgenden Produktes und dessen Art und kann im Einzelfall ermittelt werden. Der Achsegehalt wird erfindungsgemäß zwischen 10 und 90 Gew.-%, bezogen auf die Gasamtmischung (einschließlich des Anmachwassers) angegeben (abhängig unter anderem davon, ob sonstige, hydraulisch reagierende Substanzen zugegeben werden) und liegt in einem bevorzugten Bereich zwischen 30 und 70 Gew.-%.

Auch die jeweils benötigte Anmachwassermenge innerhalb des angegebenen Bereiches richtet sich nach der verwendeten Achse bzw. den sonstigen Substanzen mit hydraulischen Eigenschaften. Je feiner das hydraulische Material, umso höher ist seine Reaktionsbereitschaft und umso mehr Anmachwasser ist erforderlich. Die chemische Einbindung der Schadstoffionen läßt sich weiter verbessern, wenn nach einer vorteilhaften Ausführungsform der Erfindung der Mischung aus Asche und zu entsorgendem Stoff mindestens ein weiteres hydraulisch reagierendes Material zugesetzt wird. Die Erfindung schlägt hierzu beispielsweise eine vulkanische Achse oder Kieselsäure aus Diatomeenerde sowie Siliciumpulver (Si-Stoff) vor. Schließlich hängt die (chemische) Einbindung der schädlichen Bestandteile in die genannten Mineralphasen unter anderem auch von der Intensität der Vermischung der einzelnen Mischungskomponenten ab.

Es konnte die Einbindung folgender Substanzen nachgewiesen werden:

Salze wie Nitrade, Chloride, Cyanide, Sulfide, Sulfite oder Sulfate sowie Halogenide wie Bromide oder Jodide

aromatische Kohlenwasserstoffe wie Naphtalin, Fluoren, Phenanthren

Stickoxide

chlorierte Kohlenwasserstoffe

anorganische und organische Ammoniumverbindungen.

Schwermetalle

Wie eingangs bereits teilweise aufgeführt, können entsprechend mit dem erfindungsgemäß Verfahren beispielsweise folgende, mit Schadstoffen der genannten Art belastete Materialien, Böden oder Flüssigkeiten entsorgt werden: Sickerwässer aus Deponien, industrielle und kommunale Klärschlämme, industrielle Abwässer, Abwässer aus sogenannten Denox-Anlagen zum Beispiel Luvo-Wachswässer, Abwässer aus Tierhaltungen, Erdmaterial aus belasteten Deponien oder Industriegebieten (zum Beispiel ölbelastete Böden), Bergehalden, Flotationsrückstände, Ölschlämme aus Raffinierückständen oder dergleichen sowie Mischungen aus den genannten Stoffen. Die Anwendung des erfindungsgemäßen Verfahrens führt zu einem nach der vollständigen Hydratation festen Körper.

Dieser kann entweder als solcher deponiert werden. Gegenüber einer Deponierung der Ursprungsstoffe hat dies den Vorteil, daß der Deponiekörper jetzt in bezug auf eine Umweltbelastung weitestgehend unschädlich ist, da die Schadstoffe chemisch eingebunden sind und der Körper praktisch keiner Auslaugung unterliegt.

Das hydratisierte Material kann aber auch gebrochen/gemahlen und zum Beispiel als Bodenmaterial an die zuvor entnommene Stelle zurückgeführt werden.

Weiterhin ist eine Verwendung des Produktes als Filterschicht zum Beispiel in Deponien oder Böden möglich.

Die mit dem erfindungsgemäßen Verfahren erzielbaren Vorteile sind offensichtlich. Es gelingt ohne einen komplizierten apparativen Aufbau unterschiedlichste Schadstoffe leicht und auf Dauer chemisch in ein selbst als Abfallprodukt anzusehendes Material (Achse) einzubinden, wobei des entstehende Produkt anschließend sogar noch wiederverwendbar ist.

Durch alkalische Anreger, z.B. Kalkhydrat (bis 10 Gew.-%, bezogen auf den Festostoffanteil) der Mischung, lassen sich der erfindungsgemäßen Erfolge weiter erhöhen.

Weitere Merkmale der Erfindung sind durch die Merkmale der Unteransprüche sowie der übrigen Anmeldungsunterlagen beschrieben.

Die Erfindung wird nachstehend anhand zweier Beispiele näher erläutert, wobei Prozent-Angaben—sofern nich anders vermerkt—jeweils als Gewichtsprozent angegeben sind:

Beispiel 1:

Es wird eine Mischung aus 65% Flugasche, 5% Kalkhydrat und 30% eines Schadstoffmaterials hergestellt. Das Schadstoffmaterial besteht aus einem eingedampften Abwasser einer Rauchgasentschwefelungsanlage, wobei das trockene Produkt aufgrund der Eindickung einen fünffach höheren Schadstoffgehalt, insbesondere an Schwermetallen, aufweist.

Das Gemisch wird mit 30% Leitungswasser, bezogen auf den Feststoffanteil mit hydratphasenbildenden Eigenschaften, innig vermischt.

Folgende Schadstoffmengen in mg/kg Feststoff wurden vor Versuchsbeginn ermittelt:

CL=26.000
$SO_4$=7.200
Zn=1,82
Cu=18,5
Cr=12,4
Pb=15,8
Cd=0,72
Hg=0,422

Aus der Mischung wurden zylinderförmige Probenkörper mit einem Durchmesser von 10 cm und einer Höhe von 10 cm hergestellt. Die Proben hydratisierten anschließend. Nach 180 Tagen Lagerzeit wurden fünf Probekörper in einer entsprechenden Aufnahme übereinander zu einer Säule gestapelt und eine Leitungswassersäule unter Einstellung eines Druckes von 0,1 bar darüber aufgebaut.

Nach drei Wochen wurden am untersten der fünf Probenkörper 200 ml Eluat abgenommen, in dem folgende Schadstoffwerte in mg/l ermittelt wurden:

CL=1220
$SO_4$=1830
Zn=0,224
Cu=0,428
Cr=0,042
Pb=0,850
Cd=0,022
Hg=0,001

Die nach einem erfindungsgemäßen Verfahren hergestellten Probenkörper wiesen Wasser-Durchlässigkeitswerte (k-Werte) von $2\times10^{-10}$ cm/s auf.

Beispiel 2:

Es wurde hier eine Mischung aus 85 Gew.-teilen einer Flugasche eines Kohlenkraftwerkes mit 15 Gew.-teilen eines Abfallproduktes aus der Rachgasentschwefelungsanlage (bestehend aus 50 Gew.-teilen Flugasche und 50 Gew.-teilen eines Calciumsulfat-/Sulfitgemisches) mit 25

Gew.-teilen eines Abwassers aus derselben Rauchgasentschwefelungsanlage innig gemischt und zu den in Beispiel 1 beschriebenen Formkörpern hergestellt.

Das Abwasser der Rauchgasentschwefelungsanlage enthielt folgende Schadstoffe in mg/l:

Cl=15.800
$SO_4$=6.200
$NO_3$=3.420
Zn=14,8
Ni=2,2
Cr=4,9
Cu=2,42

Bei dem gleichen Versuchsaufbau und Durchpreßversuch wie in Beispiel 1 beschrieben, wurde hier der k-Wert zu $5\times10^{-10}$ cm/s ermittelt.

Es ergaben sich in dem nach drei Wochen am Ende des untersten Probenkörpers abgezogenen Eluat (200 ml) folgende Schadstoffwerte im Eluat in mg/l:

Cl=1.240
$SO_4$=2.200
$NO_3$=0,310
Zn=0,036
Ni=0,012
Cr=0,060
Cu=0,014

**Patentansprüche**

1. Verfahren zur Ensorgung von schadstoffbeladenen Materialien, Böden und Flüssigkeiten, wobei der zu entsorgende Stoff unmittelbar mit einer zumindest latent hydraulischen Achse zusammengeführt und gemischt wird und die Mischung anschließend im Ruhestand vollständig hydratisiert, dadurch gekennzeichnet, daß zur Verringerung der Auslaugbarkeit des hydratisierten Produktes der zu entsorgende Stoff mit einer Asche aus der Wirbelschichtfeuerung und/oder einer Elektrofilter-Achse eines Kraftwerkes, insbesondere einer Vor- und/oder Nachreinigungsachse des Elektrofilters mit einer, gegebenenfalls durch vorherige Mahlung erhaltenen Korngröße kleiner 100 µm vermischt und das Verhältnis Wasser/hydratphasenbildende Substanzen, gegebenenfalls unter gleichzeitiger Wasserzugabe, auf einen Wert zwischen 0,23 und 0,35 eingestellt wird.

2. Verfahren nach Anspruch 1, gekennzeichnet durch eine Einstellung des Verhältnisses Wasser/hydratphasenbildende Substanzen zwischen 0,23 und 0,30.

3. Verfahren nach Anspruch 1 oder 2, gekennzeichnet durch Zugabe eines Fließ- oder Dichtungsmittels in einer Menge von je 0,1 bis 1,8 Gew.-%, bezogen auf den Achse-anteil.

4. Verfahren nach einem der Ansprüche 1 bis 3, dadurch gekennzeichnet, daß die Korngröße der Aschse kleiner 70 µm beträgt.

5. Verfahren nach einem der Ansprüche 1 bis 4, dadurch gekennzeichnet, daß der Gehalt der Achse zwischen 10 und 90 Gew.-%, bezogen auf die Gesamtmischung, eingestellt wird.

6. Verfahren nach einem der Ansprüche 1 bis 5, gekennzeichnet durch die Zugabe wenigstens eines weiteren, hydraulisch reagierenden Materials.

7. Verfahren nach Anspruch 6, gekennzeichnet durch die Zugabe einer vulkanischen Achse und/oder einer Kieselsäure aus Diatomeenerde.

8. Verfahren nach einem der Ansprüche 1 bis 7, gekennzeichnet durch die Zugabe eines Calciumsulfat-Produktes, insbesondere aus der Rauchgasentschwefelung, zu den Ausgangsstoffen oder während des Mischens.

9. Verfahren nach einem der Ansprüche 1 bis 8 zur Entsorgung von mit aromatischen oder chlorierten Kohlenwasserstoffen, Salzen und/oder Stickoxiden belasteten Feststoffen und/oder Flüssigkeiten.

10. Verfahren nach einem der Ansprüche 1 bis 9 zur Entsorgung von Abwässern aus Rauchgasentschwefelungsanlagen.

11. Verfahren nach einem der Ansprüche 1 bis 9 zur Entsorgung von Klärschlämmen.

12. Verfahren nach einem der Ansprüche 1 bis 9 zur Entsorgung von industriellen oder kommunalen Abwässern.

13. Verfahren nach einem der Ansprüche 1 bis 9 zur Entsorgung von Sickerwässern aus Deponien.

14. Verfahren nach einem der Ansprüche 1 bis 9 zur Entsorgung von Ölschlämmen.

15. Verfahren nach einem der Ansprüche 1 bis 9 zur Entsorgung von Abwässern aus der Tierhaltung.

16. Verfahren nach einem der Ansprüche 1 bis 9 zur Entsorgung von schadstoffbalastetem Sand oder Erdreich.

17. Verfahren nach einem der Ansprüche 1 bis 9 zur Entsorgung von Bergehalden und Flotationsrückständen.

18. Verwendung eines nach dem Verfahren nach einem der Ansprüche 1 bis 17 erhaltenen hydratisierten Produktes als Deponiematerial.

19. Verwendung eines nach dem Verfahren nach einem der Ansprüche 1 bis 17 erhaltenen hydratisierten Produktes, gegebenenfalls nach vorherige Mahlung, als Bodenmaterial.

20. Verwendung eines nach dem Verfahren nach einem der Ansprüche 1 bis 17 erhaltenen hydratisierten Produktes als Filterschicht in Deponien und Böden.

**Revendications**

1. Procédé pour la décontamination de matériaux, sols et liquides chargés en substances polluantes, la substance à décontaminer étant directement reünie et mélangée à une cendre hydraulique au moins de façon latente et le mélange étant ensuite complètement hydraté au repos, caractérisé en ce que, pour diminuer la capacité au lessivage du produit hydraté, la substance à décontaminer est mélangée à une cendre provenant du chauffage à couche turbulente et/ou à une cendre de l'électrofiltre d'une centrale de force motrice, en particulier à une cendre d'épuration préalable et/ou ultérieur de l'électrofiltre d'un calibre, obtenu éventuellement par mouture préalable, inférieure à 100 µm et que l'on amène le rapport eau/substances formant une phase hydratée à une valeur entre 0,23 et 0,35, éventuellement par l'addition simultanée d'eau.

2. Procédé selon la revendication 1, caractérisé par un ajustage du rapport eau/substances formant la phase hydratée entre 0,23 et 0,30.

3. Procédé selon la revendication 1 ou 2, caractérisé par l'addition d'un agent de fluidité ou d'un agent d'étanchéité en une quantité de respectivement 0,1 à 1,8% en poids, par rapport au taux de cendre.

4. Procédé selon l'une des revendications 1 à 3, caractérisé en ce que le calibre de la cendre est inférieur à 70 µm.

5. Procédé selon l'une des revendications 1 à 4, caractérisé en ce que que le pourcentage de cendre est ajusté entre 10 et 90% en poids, par rapport au mélange total.

6. Procédé selon l'une des revendications 1 à 5, caractérisé par l'addition d'au moins une autre matière à réaction hydraulique.

7. Procédé selon la revendication 6, caractérisé par l'addition d'une cendre volcanique et/ou d'un acide silicique de terre à diatomées.

8. Procédé selon l'une des revendications 1 à 7, caractérisé par l'addition d'un produit à base de sulfate de calcium, en particulier provenant de la désulfuration des gaz de fumée, aux substances de départ ou pendant le mélange.

9. Procédé selon l'une des revendications 1 à 8 pour la décontamination de matières solides et/ou de liquides chargés d'hydrocarbures aromatiques ou chlorés, de sels et/ou d'oxydes azotiques.

10. Procédé selon l'une des revendications 1 à 9 pour la décontamination d'eaux usées provenant d'installations de désulfuration des gaz de fumée.

11. Procédé selon l'une des revendications 1 à 9 pour la décontamination de boues de curage.

12. Procédé selon l'une des revendications 1 à 9 pour la décontamination d'eaux usées industrielles ou communales.

13. Procédé selon l'une des revendications 1 à 9 pour la décontamination d'eaux d'infiltration provenant de décharges.

14. Procédé selon l'une des revendications 1 à 9 pour la décontamination de boues d'huile.

15. Procédé selon l'une des revendications 1 à 9, pour la décontamination d'eaux usées provenant de l'élevage d'animaux.

16. Procédé selon l'une des revendications 1 à 9, pour la décontamination de sable ou de terre chargée en substances polluantes.

17. Procédé selon l'une des revendications 1 à 9 pour la décontamination de terrils et de résidus de flottation.

18. Utilisation d'un produit hydraté obtenu selon le méthode selon l'une des revendications 1 à 17 comme matière pour décharge.

19. Utilisation d'un produit hydraté obtenu selon la méthode selon l'une des revendications 1 à 17, éventuellement après mouture préalable, comme matière pour sol.

20. Utilisation d'un produit hydraté obtenu selon la méthode selon l'une des revendications 1 à 17 comme couche filtrante dans décharges et sols.

**Claims**

1. Process for the purification of materials, soils and liquids ladened with dangerous substances, in which the material to be purified is brought together with at least one latently hydraulic ash and mixed and then the mixture is completely hydrated in a state of rest, characterized by the fact that to reduce the leaching capacity of the hydrated product, the material to be purified is mixed with ash from the fluidized bed firing and/or an electro-filter ash of a power plant, in particular a pre- and/or post-cleaning ash of the electro-filter with a granule size smaller than 100 µm obtained, if necessary, by pre-grinding, and the ratio of water to hydrate phase forming substances, if necessary with water being added at the same time, is adjusted to a value between 0.23 and 0.35.

2. Process according to Claim 1, characterized by a regulation of the ratio of water to hydrate phase forming substances to between 0.23 and 0.30.

3. Process according to Claims 1 or 2, characterized by the addition of a fluidizing or sealing agent in an amount of 0.1 to 1.8 percent by weight, in relation to the ash portion.

4. Process according to one of Claims 1 through 3, characterized by the fact that the granule size of the ashes is smaller than 70 µm.

5. Process according to one of Claims 1 through 4, characterized by the fact that the ash content is set between 10 and 90 percent by weight in relation to the total mixture.

6. Process according to one of Claims 1 through 5, characterized by the addition of at least one other hydraulically reacting material.

7. Process according to Claim 6, characterized by the addition of a volcanic ash and/or a silicic acid from diatome earth.

8. Process according to one of Claims 1 through 7, characterized by the addition of a calcium sulfate product, in particular from the flue gas desulfurization, to the starting materials or during mixing.

9. Process according to one of Claims 1 through 8 for the purification of solids and/or liquids ladened with aromatic or chlorinated carbohydrates, salts and/or nitric oxides.

10. Process according to one of Claims 1 through 9 for the purification of waste waters from flue gas desulfurization plants.

11. Process according to one of Claims 1 through 9 for the purification of clearing sludges.

12. Process according to one of Claims 1 through 9 for the purification of industrial or municipal waste waters.

13. Process according to one of Claims 1 through 9 for the purification of percolating waters from deposits.

14. Process according to one of Claims 1 through 9 for the purification of oil sludges.

15. Process according to one of Claims 1 through 9 for the purification of waste waters from animal farms.

16. Process according to one of Claims 1 through 9 for the purification of sand or earth ladened with dangerous substances.

17. Process according to one of Claims 1 through 9 for the purification of slag heaps and flotation residues.

18. Use of a hydrated product obtained according to the process in one of Claims 1 through 17 as deposit material.

19. Use of a hydrated product obtained according to the process in one of Claims 1 through 17, if necessary after pre-grinding, as soil material.

20. Use of a hydrated product obtained according to the process in one of Claims 1 through 17 as filter layer in deposits and soils.